(19) Europäisches Patentamt
European Patent Office
Office européen des brevets

(11) Veröffentlichungsnummer: **0 496 757 B1**

# (12) EUROPÄISCHE PATENTSCHRIFT

(45) Veröffentlichungstag der Patentschrift: **12.07.95**

(51) Int. Cl.6: **A01N 35/10**, A01N 41/10

(21) Anmeldenummer: **90915110.2**

(22) Anmeldetag: **12.10.90**

(86) Internationale Anmeldenummer:
**PCT/EP90/01721**

(87) Internationale Veröffentlichungsnummer:
**WO 91/05470 (02.05.91 91/10)**

## (54) VERFAHREN ZUR BEKÄMPFUNG VON SCHADPFLANZEN IN REIS.

(30) Priorität: **18.10.89 DE 3934706**
**25.11.89 DE 3939094**
**30.12.89 DE 3943397**

(43) Veröffentlichungstag der Anmeldung:
**05.08.92 Patentblatt 92/32**

(45) Bekanntmachung des Hinweises auf die Patenterteilung:
**12.07.95 Patentblatt 95/28**

(84) Benannte Vertragsstaaten:
**IT**

(56) Entgegenhaltungen:
**EP-A- 0 319 075**

**Chemical Patents Index, Basic Abstracts Journal, Section C, Woche 8728, 9.September 1987, Derwent Publications Ltd., (London, GB), siehe Nr. 87-194654/28, & JP-A-62123145 (OTSUKA KAGAKU YAKUHIN), 4. Juni 1987**

(73) Patentinhaber: **Hoechst Schering AgrEvo GmbH**
**Gerichtstrasse 27**
**D-13342 Berlin (DE)**

(72) Erfinder: **ORT, Oswald**
**Gundelhardtstrasse 41**
**D-6233 Kelkheim (DE)**
Erfinder: **WILLMS, Lothar**
**Lindenstrasse 17**
**D-5416 Hillscheid (DE)**
Erfinder: **ZEISS, Hans-Joachim**
**Hauptstrasse 127**
**D-6231 Sulzbach (DE)**
Erfinder: **BAUER, Klaus**
**Doorner Strasse 53 d**
**D-6450 Hanau (DE)**
Erfinder: **BIERINGER, Hermann**
**Eichenweg 26**
**D-6239 Eppstein (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Rank Xerox (UK) Business Services
(3.10/3.09/3.3.3)

## Beschreibung

Die Erfindung liegt auf dem Gebiet der Pflanzenschutzmittel, die gegen monokotyle und dikotyle Unkräuter eingesetzt werden können.

Aus EP-A 01 37 963, EP-A 01 86 118, EP-A 02 74 634, EP-A 02 98 680 und US-A 4,780,127 sind 2-Benzoylcyclohexandion-derivate bekannt, die als Mittel zur Bekämpfung eines breiten Spektrums mono- und dikotyler Unkräuter beschrieben sind.

Bei den Aufwandmengen von 0,56 bis 4,48 kg a.i./ha, die in den bisher bekannten Tests angewandt wurden, treten jedoch erhebliche Schäden an Nutzpflanzen auf, wenn man die Herbizide gegen Schadpflanzen in Nutzpflanzenkulturen einsetzt. Verringert man dagegen die Aufwandmenge derart, daß keine oder nur geringe Schäden an den Nutzpflanzen auftreten, erhält man in vielen wichtigen Kulturen nicht ausreichende herbizide Wirkung gegen die dort typisch vorkommenden Schadpflanzen, so daß in manchen Fällen erst synergistische Mischungen einen sinnvollen Einsatz der 2-Benzoylcyclohexandion-derivate erlauben (vgl. EP-A-0 284 634).

Es wurde nun gefunden, daß die genannten Verbindungen eine ausgezeichnete Selektivität im Reis aufweisen, wobei überraschenderweise auch bei niedrigen Wirkstoffdosierungen eine hervorragende Wirkung gegen die in Reiskulturen typisch auftretenden Schadpflanzen erhalten bleibt. Insbesondere werden im Reisanbau vorkommende, oft schwer bekämpfbare perennierende Unkräuter, beispielsweise Sagittaria spec., Cyperus serotimus, Scirpus maritimus, Eleocharis spec. und Scirpus juncoides, sowie ein breites Spektrum an annuellen Unkräutern wirksam bekämpft.

Gegenstand der vorliegenden Erfindung ist deshalb ein Verfahren zur Bekämpfung von Schadpflanzen in Reiskulturen, dadurch gekennzeichnet, daß man ein oder mehrere Verbindungen der allgemeinen Formel (I) oder deren Salze,

(I)

worin

$R^1$ Halogen, $(C_1\text{-}C_4)$-Alkoxy, $(C_1\text{-}C_4)$-Alkyl, $(C_1\text{-}C_4)$-Haloalkyl, $-NO_2$, -CN oder $S(O)_nR^{10}$;

$R^2$ und $R^3$ unabhängig voneinander Wasserstoff, Halogen, $(C_1\text{-}C_4)$-Alkyl, $(C_1\text{-}C_4)$-Alkoxy, $OCF_3$, $(C_1\text{-}C_4)$-Haloalkyl, -CN, $-NO_2$, $-S(O)_m\text{-}R^{11}$, $-NR^{12}R^{13}$, $-NR^{14}\text{-CO-}R^{15}$, $\text{-CO-}R^{16}$;

$R^4$, $R^6$, $R^7$, $R^8$, $R^9$ unabhängig voneinander Wasserstoff oder $(C_1\text{-}C_4)$-Alkyl;

$R^5$ Wasserstoff, $(C_1\text{-}C_4)$-Alkyl oder $\text{-CO-O-}(C_1\text{-}C_4)$-Alkyl;

$R^{10}$ $(C_1\text{-}C_4)$-Alkyl, $(C_1\text{-}C_4)$-Haloalkyl oder $(C_1\text{-}C_4)$-Alkoxy;

$R^{11}$ $(C_1\text{-}C_4)$-Alkyl, $(C_1\text{-}C_4)$-Haloalkyl, Phenyl, Benzyl, oder $-NR^{17}R^{18}$;

$R^{12}$ und $R^{13}$ unabhängig voneinander Wasserstoff oder $(C_1\text{-}C_4)$-Alkyl;

$R^{14}$ Wasserstoff oder $(C_1\text{-}C_4)$-Alkyl;

$R^{15}$ $(C_1\text{-}C_4)$-Alkyl;

$R^{16}$ Wasserstoff, $(C_1\text{-}C_4)$-Alkyl, $(C_1\text{-}C_4)$-Haloalkyl oder $(C_1\text{-}C_4)$-Alkoxy;

$R^{17}$ und $R^{18}$ unabhängig voneinander Wasserstoff oder $(C_1\text{-}C_4)$-Alkyl und

n und m unabhängig voneinander 0, 1 oder 2 bedeuten,

auf die Anbaufläche, welche Schad- und Reispflanzen oder deren Samen enthält, in einer wirksamen Menge von 0,001 bis 0,5 kg a.i./ha, vorzugsweise 0,01 bis 0,2 kg a.i./ha, insbesondere 0,02 bis 0,12 kg a.i./ha, appliziert.

Von besonderem Interesse ist das erfindungsgemäße Verfahren mit Verbindungen der genannten Formel (I) oder deren Salzen, worin

$R^1$ Fluor, Chlor, Brom, Jod, Methoxy, Nitro, Cyano oder $-S(O)_nR^{10}$;

$R^2$ und $R^3$ unabhängig voneinander Wasserstoff, Fluor, Chlor, Brom, Jod, Methyl, Methoxy, Trifluormethoxy, Cyano, Nitro, Trifluormethyl, $-SO_2R^{11}$, $-NR^{12}R^{13}$, $-N(CH_3)\text{-CO-}R^{15}$ oder $\text{-CO-O-}(C_1\text{-}C_4)$-Alkyl und

$R^4$, $R^5$, $R^6$, $R^7$, $R^8$ und $R^9$ unabhängig voneinander Wasserstoff oder Methyl bedeuten sowie

$R^{10}$, $R^{11}$, $R^{12}$, $R^{13}$, $R^{14}$ und n wie oben definiert sind.

Besonders bevorzugt ist das erfindungsgemäße Verfahren mit Verbindungen der Formel (I) oder deren Salzen, in denen

$R^2$ und $R^3$ unabhängig voneinander Wasserstoff, Fluor, Chlor, Brom, $-N(CH_3)_2$, Methoxy, Nitro, $-SO_2CH_3$, $-SO_2C_2H_5$, $-SO_2CH_2Cl$, $-SO_2N(CH_3)_2$ oder Trifluormethyl und

n 2 bedeuten sowie

$R^1$, $R^4$, $R^5$, $R^6$, $R^7$, $R^8$ und $R^9$ wie oben definiert sind.

Die Verbindungen der Formel (I) können in verschiedenen tautomeren Strukturen (Keto-Enol-Tautomerie) vorliegen und verfügen über ein sehr acides Wasserstoffatom an der Methingruppe zwischen den drei Carbonylgruppen, das durch ein für die Landwirtschaft geeignetes Kation ersetzt werden kann. Die dann vorliegenden Salze sind im allgemeinen Metall-, insbesondere Alkali-, Erdalkali-, gegebenenfalls substituierte oder unsubstituierte Ammonium-, Sulfonium- oder Phosphoniumsalze, in denen die Substituenten aliphatische oder aromatische Reste sein können. Geeignete Basen zur Herstellung der erfindungsgemäßen Salze sind beispielsweise Alkalicarbonate, wie Kaliumcarbonat, Alkali- und Erdalkalihydroxide, Ammoniak oder Ethanolamin.

Unter Alkylresten werden Reste mit der angegebenen Anzahl Kohlenstoffatomen verstanden. Die Reste können geradkettig oder verzweigt sein. Die gebräuchlichsten Reste sind beispielsweise Methyl, Ethyl, n-Propyl, Isopropyl, n-Butyl, Isobutyl, sek.-Butyl oder tert.-Butyl. Unter Halogen wird Fluor, Chlor, Brom oder Jod verstanden. Haloalkyl-Reste können ein- oder mehrfach mit Halogen substituiert sein, d.h. auch perhalogeniert sein.

Besonders geeignete Verbindungen der Formel (I) in den erfindungsgemäß einzusetzenden herbiziden Mitteln sind beispielsweise 2-(2-Chlor-4-methylsulfonylbenzoyl)-1,3-cyclohexandion (Ia) (siehe Beispiel 1, Chemische Beispiele), 2-(2-Nitrobenzoyl)-4,4-dimethyl-1,3-cyclohexandion (Ib) (siehe Tab. 1, Beispiel 12), 2-(2-Chlor-4-ethylsulfonylbenzoyl)-5,5-dimethyl-1,3-cyclohexandion (Ic, Tab. 1, Bsp. 5), 2-(2-Nitro-4-chlorbenzoyl)-4-(1-methylethyl)-1,3-cyclohexandion (Id, Tabelle 1, Bsp. 38), 2-(2-Nitro-4-chlorbenzoyl)-4,4-dimethyl-1,3-cyclohexandion (Ie, Tab. 1, Bsp. 7), 2-(2-Chlor-4-methylsulfonylbenzoyl)-4,4-dimethyl-6-methyl-1,3-cyclohexandion (If, Tab. 1, Bsp. 18). Die 2-Benzoylcyclohexandion-Derivate der Formel (I) sind bekannt, siehe z.B. die genannten EP-A-Veröffentlichungen Nr. 0 137 963, 0 186 118, 0 274 634 und 0 298 680 und U.S. Patent 4 780 127, oder können nach den dort angegebenen Methoden hergestellt werden.

Die erfindungsgemäß eingesetzten Verbindungen weisen eine ausgezeichnete herbizide Wirksamkeit gegen ein breites Spektrum wirtschaftlich wichtiger mono- und dikotyler Schadpflanzen in Reiskulturen auf. Auch schwer bekämpfbare perennierende Unkräuter, die aus Rhizomen, Wurzelstöcken oder anderen Dauerorganen austreiben, werden durch die Wirkstoffe gut erfaßt. Dabei ist es gleichgültig, ob die Substanzen im Vorsaat-, Vorauflauf- oder Nachauflaufverfahren ausgebracht werden. Bevorzugt ist die Anwendung im Vorauflauf- und/oder im frühen Nachauflaufverfahren. Im einzelnen seien beispielhaft einige Vertreter der mono- und dikotylen Unkrautflora genannt, die durch die erfindungsgemäßen Mittel kontrolliert werden können, ohne daß durch die Nennung eine Beschränkung auf bestimmte Arten erfolgen soll.

Auf der Seite der monokotylen Unkrautarten werden z. B. Cyperusarten aus der annuellen Gruppe und auf seiten der perennierenden Spezies ausdauernde Cyperusarten, Scirpus-Arten und Eleocharis-Arten gut erfaßt.

Unter den spezifischen Kulturbedingungen im Reis vorkommende Unkräuter wie z. B. Sagittaria, Alisma, Eleocharis, Scirpus, Cyperus etc. werden von den erfindungsgemäß einzusetzenden Wirkstoffen hervorragend bekämpft.

Bei dikotylen Unkrautarten erstreckt sich das Wirkungsspektrum beispielsweise auf Rotala, Sphenoclea, Eclipta, Potamogeton, Heteranthera, Aeschynomene, Ammannia.

Werden die erfindungsgemäß eingesetzen Verbindungen vor dem Keimen auf die Erdoberfläche appliziert, so wachsen die Unkräuter bis zum Keimblattstadium heran, stellen jedoch dann ihr Wachstum ein und sterben schließlich nach Ablauf von drei bis vier Wochen vollkommen ab.

Bei Applikation der Verbindungen der Formel (I) oder deren Salze auf die grünen Pflanzenteile im Nachauflaufverfahren tritt ebenfalls sehr rasch nach der Behandlung ein drastischer Wachstumsstop ein, und die Unkrautpflanzen bleiben in dem zum Applikationszeitpunkt vorhandenen Wuchsstadium stehen oder sterben nach einer gewissen Zeit ab, so daß auf diese Weise eine für die Kulturpflanzen schädliche Unkrautkonkurrenz sehr früh und nachhaltig durch den erfindungsgemäßen Einsatz der Verbindungen der Formel (I) oder deren Salze beseitigt werden kann.

Obgleich die erfindungsgemäße eingesetzten Verbindungen eine ausgezeichnete herbizide Aktivität gegenüber mono- und dikotylen Unkräutern aufweisen, werden Reiskulturen aus gesätem oder verpflanztem Reis nur unwesentlich oder gar nicht geschädigt. Die Verbindungen der Formel (I) oder deren Salze eignen

sich aus diesen Gründen sehr gut zur selektiven Bekämpfung von Schadpflanzen in Reiskulturen.

Die Aufwandmengen der Verbindungen der Formel (I) oder deren Salze hängen von den Witterungs- und Bodenverhältnissen sowie von den speziellen Schadpflanzen und den Reissorten ab und sind in der Regel im Bereich von 0,001 bis 0,5 kg a.i/ha, vorzugsweise 0,01 bis 0,2 kg a.i./ha. Besonders bevorzugt ist die Anwendung mit 0,02 bis 0,12 kg a.i./ha im späten Vorauflauf- oder frühen Nachauflaufverfahren.

Die Verbindungen der Formel (I) oder deren Salze können auf verschiedene Art formuliert werden, je nachdem welche biologischen und/oder chemisch-physikalischen Parameter vorgegeben sind. Als Formulierungsmöglichkeiten kommen beispielsweise in Frage: Spritzpulver (WP), wasserlösliche Pulver (SP)-,emulgierbare Konzentrate (EC), wäßrige Lösungen oder Konzentrate (SL), Emulsionen (EW) wie Öl-in-Wasser- und Wasser-in-Öl-Emulsionen, versprühbare Lösungen, Kapselsuspensionen (CS), Dispersionen auf Öl- oder Wasserbasis, Suspoemulsionen, Suspensionskonzentrate (SC), Stäubemittel (DP), ölmischbare Lösungen (OL), Beizmittel, Granulate (GR) in Form von Mikro-, Sprüh-, Aufzugs- und Adsorptionsgranulaten, Granulate zur Boden- oder Streuapplikation, wasserdispergierbare Granulate (WG), ULV-Formulierungen, Mikrokapseln oder Wachse.

Diese einzelnen Formulierungstypen sind im Prinzip bekannt und werden beispielsweise beschrieben in: Winnacker-Küchler, "Chemische Technologie", Band 7, C. Hauser Verlag München, 4. Aufl. 1986; van Valkenburg, "Pesticides Formulations", Marcel Dekker N.Y., 2nd Ed. 1972-73; K. Martens, "Spray Drying Handbook", 3rd Ed. 1979, G. Goodwin Ltd. London.

Die notwendigen Formulierungshilfsmittel wie Inertmaterialien, Tenside, Lösungsmittel und weitere Zusatzstoffe sind ebenfalls bekannt und werden beispielsweise beschrieben in: Watkins, "Handbook of Insecticide Dust Diluents and Carriers", 2nd Ed., Darland Books, Caldwell N.J.; H.v.Olphen, "Introduction to Clay Colloid Chemistry"; 2nd Ed., J. Wiley & Sons, N.Y., Marsden, "Solvents Guide", 2nd Ed., Interscience, N.Y. 1950; McCutcheon's "Detergents and Emulsifiers Annual", MC Publ. Corp., Ridgewood N.J.; Sisley and Wood, "Encyclopedia of Surface Active Agents", Chem. Publ. Co. Inc., N.Y. 1964; Schönfeldt, "Grenzflächenaktive Äthylenoxidaddukte", Wiss. Verlagsgesell., Stuttgart 1976; Winnacker-Küchler, "Chemische Technologie", Band 7, C. Hauser Verlag München, 4. Aufl. 1986.

Auf der Basis dieser Formulierungen lassen sich auch Kombinationen mit anderen pestizid wirksamen Stoffen, wie anderen Herbiziden, Fungiziden oder Insektiziden, sowie Düngemitteln und/oder Wachstumsregulatoren herstellen, z.B. in Form einer Fertigformulierung oder als Tankmix.

Spritzpulver (benetzbare Pulver) sind in Wasser gleichmäßig dispergierbare Präparate, die neben dem Wirkstoff außer einem Verdünnungs- oder Inertstoff noch Netzmittel, z.B. polyoxethylierte Alkylphenole, polyoxalkylierte Fettalkohole oder polyoxalkylierte Fettamine, Alkan- oder Alkylbenzolsulfonate und Dispergiermittel, z.B. ligninsulfonsaures Natrium, 2,2'-dinaphthylmethan-6,6'-disulfonsaures Natrium, dibutylnaphthalin-sulfonsaures Natrium oder auch oleylmethyltaurinsaures Natrium enthalten.

Emulgierbare Konzentrate werden durch Auflösen des Wirkstoffes in einem organischen Lösungsmittel, z.B. Butanol, Cyclohexanon, Dimethylformamid, Xylol oder auch höhersiedenden Aromaten oder Kohlenwasserstoffen unter Zusatz von einem oder mehreren Emulgatoren hergestellt. Als Emulgatoren können beispielsweise verwendet werden: Alkylarylsulfonsaure Calzium-Salze wie Ca-Dodecylbenzolsulfonat oder nichtionische Emulgatoren wie Fettsäurepolyglykolester, Alkylarylpolyglykolether, Fettalkoholpolyglykolether, Propylenoxid-Ethylenoxid-Kondensationsprodukte, Alkylpolyether, Sorbitanfettsäureester, Polyoxyethylensorbitanfettsäureester oder Polyoxethylensorbitester.

Stäubemittel erhält man durch Vermahlen des Wirkstoffes mit fein verteilten festen Stoffen, z.B. Talkum, natürlichen Tonen wie Kaolin, Bentonit, Pyrophillit oder Diatomeenerde.

Granulate können entweder durch Verdüsen des Wirkstoffes auf adsorptionsfähiges, granuliertes Inertmaterial hergestellt werden oder durch Aufbringen von Wirkstoffkonzentraten mittels Klebemitteln, z.B. Polyvinylalkohol, polyacrylsaurem Natrium oder auch Mineralölen, auf die Oberfläche von Trägerstoffen wie Sand, Kaolinite oder von granuliertem Inertmaterial. Auch können geeignete Wirkstoffe in der für die Herstellung von Düngemittelgranulaten üblichen Weise - gewünschtenfalls in Mischung mit Düngemitteln - granuliert werden.

Die agrochemischen Zubereitungen enthalten in der Regel 0,1 bis 99 Gewichtsprozent, insbesondere 2 bis 95 Gew.-%, Wirkstoffe der Formel (I), wobei die optimalen Konzentrationen in den Formulierungen verschieden sein können.

In Spritzpulvern beträgt die Wirkstoffkonzentration z.B. etwa 10 bis 95 Gew.-%, der Rest zu 100 Gew.-% besteht aus üblichen Formulierungsbestandteilen. Bei emulgierbaren Konzentraten kann die Wirkstoffkonzentration etwa 1 bis 85 Gew.-%, vorzugsweise 5 bis 80 Gew.-% betragen. Staubförmige Formulierungen enthalten etwa 1 bis 25 Gew.-%, meistens 5 bis 20 Gew.-% an Wirkstoff, versprühbare Lösungen etwa 0,2 bis 25 Gew.-%, vorzugsweise 2 bis 20 Gew.-% Wirkstoff. Bei Granulaten wie wasserdispergierbaren Granulaten hängt der Wirkstoffgehalt zum Teil davon ab, ob die wirksame Verbindung flüssig oder fest

vorliegt und welche Granulierhilfsmittel und Füllstoffe verwendet werden. In der Regel liegt der Gehalt bei den in Wasser dispergierbaren Granulaten zwischen 10 und 90 Gew.-%.

Daneben enthalten die genannten Wirkstofformulierungen gegebenenfalls die jeweils üblichen Haft-, Netz-, Dispergier, Emulgier-, Penetrations-, Lösungsmittel, Füll- oder Trägerstoffe.

Zur Anwendung werden die in handelsüblicher Form vorliegenden Formulierungen gegebenenfalls in üblicher Weise verdünnt, z.B. bei Spritzpulvern, emulgierbaren Konzentraten, Dispersionen und wasserdispergierbaren Granulaten mittels Wasser. Staubförmige Zubereitungen, Boden- bzw. Streugranulate, sowie versprühbare Lösungen werden vor der Anwendung üblicherweise nicht mehr mit weiteren inerten Stoffen verdünnt.

Mit den äußeren Bedingungen wie Temperatur, Feuchtigkeit, der Art des verwendeten Herbizids u.a. variiert die erforderliche Aufwandmenge der Verbindungen der Formel (I).

Folgende Beispiele dienen zur Erläuterung der Erfindung:

## A. Formulierungsbeispiele

a) Ein Stäubmittel wird erhalten, indem man 10 Gew.-Teile Wirkstoff der Formel (I) oder dessen Salz und 90 Gew.-Teile Talkum als Inertstoff mischt und in einer Schlagmühle zerkleinert.

b) Ein in Wasser leicht dispergierbares, benetzbares Pulver wird erhalten, indem man 25 Gewichtsteile Wirkstoff der Formel (I) oder dessen Salz, 64 Gewichtsteile kaolinhaltigen Quarz als Inertstoff, 10 Gewichtsteile ligninsulfonsaures Kalium und 1 Gew.-Teil oleoylmethyltaurinsaures Natrium als Netz- und Dispergiermittel mischt und in einer Stiftmühle mahlt.

c) Ein in Wasser leicht dispergierbares Dispersionskonzentrat wird erhalten, indem man 20 Gewichtsteile Wirkstoff der Formel (I) oder dessen Salz mit 6 Gew.-Teilen Alkylphenolpolyglykolether (®Triton X 207), 3 Gew.-Teilen Isotridecanolpolyglykolether (8 EO) und 71 Gew.-Teilen paraffinischem Mineralöl (Siedebereich z.B. ca. 255 bis über 277 °C) mischt und in einer Reibkugelmühle auf eine Feinheit von unter 5 Mikron vermahlt.

d) Ein emulgierbares Konzentrat wird erhalten aus 15 Gew.-Teilen herbizidem Wirkstoff, 75 Gew.-Teilen Cyclohexanon als Lösemittel und 10 Gew.-Teilen oxethyliertes Nonylphenol als Emulgator.

e) Ein in Wasser dispergierbares Granulat wird erhalten, indem man
75 Gewichtsteile Wirkstoff der Formel (I) oder dessen Salz
10 Gewichtsteile ligninsulfonsaures Calcium,
5 Gewichtsteile Natriumlaurylsulfat,
3 Gewichtsteile Polyvinylalkohol und
7 Gewichtsteile Kaolin
mischt, auf einer Stiftmühle mahlt und das Pulver in einem Wirbelbett durch Aufsprühen von Wasser als Granulierflüssigkeit granuliert.

f) Ein in Wasser dispergierbares Granulat wird auch erhalten, indem man
25 Gewichtsteile Wirkstoff der Formel (I) oder dessen Salz
5 Gewichtsteile 2,2'-dinaphthylmethan-6,6' disulfonsaures Natrium,
2 Gewichtsteile oleoylmethyltaurinsaures Natrium,
1 Gewichtsteil Polyvinylalkohol,
17 Gewichtsteile Calciumcarbonat und
50 Gewichtsteile Wasser
auf einer Kolloidmühle homogensiert und vorzerkleinert, anschließend auf einer Perlmühle mahlt und die so erhaltene Suspension in einem Sprühturm mittels einer Einstoffdüse zerstäubt und trocknet.

## B. Chemische Beispiele

Beispiel 1:

2-[2-Chlor-4-(methylsulfonyl)benzoyl]-1,3-cyclohexandion

42,5 g 2-Chlor-4-methylsulfonylbenzoesäure wurden mit 5 Tropfen Dimethylformamid und 25,1 ml Thionylchlorid in 160 ml Dioxan gekocht, bis die Gasentwicklung nachließ. Das Solvens wurde unter Feuchtigkeitsausschluß am Rotationsverdampfer abgezogen. Zu dem öligen Rückstand gab man bei 0 °C 19,7 g 1,3-Cyclohexandion in 250 ml Acetonitril und tropfte dann bei dieser Temperatur 63,1 ml Triethylamin zu. Man rührte 15 min nach, versetzte mit 15,3 ml Acetoncyanhydrin und ließ über Nacht stehen. Das Reaktionsgemisch wurde unter reduziertem Druck am Rotationsverdampfer eingeengt, der Rückstand in

Essigester/Wasser aufgenommen und die organische Phase mit 2N Salzsäure gewaschen. Das Produkt wurde mit 5 %-iger $K_2CO_3$-Lsg. aus der organischen Phase extrahiert, und mit konzentrierter Salzsäure bei pH 2-3 unter Kühlung ausgefällt. Man erhielt nach Absaugen und Trocknen 48,4 g 2-[2-Chlor-4-(methylsulfonyl)benzoyl]-1,3-cyclohexandion vom Schmp. 141-142 °C.

In analoger Weise wurden die in Tabelle 1 aufgeführten Verbindungen erhalten:

**Tabelle 1**

(I)

| Bsp. Nr. | $R^1$ | $R^2$ | $R^3$ | $R^4$ | $R^5$ | $R^6$ | $R^7$ | $R^8$ | $R^9$ | Schmp. [°C] |
|---|---|---|---|---|---|---|---|---|---|---|
| 2 | $-NO_2$ | -Cl | H | H | H | H | H | H | H | 183 |
| 3 | $-NO_2$ | -H | $2-CH_3$ | H | H | $CH_3$ | $CH_3$ | H | H | 112 |
| 4 | -Cl | $-SO_2C_2H_5$ | H | H | H | H | H | H | H | Öl |
| 5 | -Cl | $-SO_2C_2H_5$ | H | H | H | $CH_3$ | $CH_3$ | H | H | Öl |
| 6 | -Cl | $-NO_2$ | H | $CH_3$ | $CH_3$ | H | H | H | H | 90 |
| 7 | $-NO_2$ | -Cl | H | $CH_3$ | $CH_3$ | H | H | H | H | 126 |
| 8 | $-NO_2$ | -Cl | H | H | H | $CH_3$ | $CH_3$ | H | H | 119 |
| 9 | -H | -H | $3-CF_3O$ | H | H | $CH_3$ | $CH_3$ | H | H | Öl |
| 10 | -Cl | -F | H | H | H | $CH_3$ | $CH_3$ | H | H | Öl |
| 11 | -Cl | $-SO_2CH_3$ | H | H | $i-C_3H_7$ | H | H | H | H | Öl |
| 12 | $-NO_2$ | -H | H | $CH_3$ | $CH_3$ | H | H | H | H | Öl |
| 13 | $-NO_2$ | -H | H | H | $CH_3$ | H | H | $CH_3$ | $CH_3$ | Öl |
| 14 | $-NO_2$ | -Cl | H | $CH_3$ | H | H | H | $CH_3$ | $CH_3$ | Öl |
| 15 | -Cl | $-NO_2$ | H | $CH_3$ | $CH_3$ | H | H | $CH_3$ | H | Öl |
| 16 | -Cl | -Cl | H | $i-C_3H_7$ | H | H | H | H | H | Öl |

Tabelle 1, Forts.

| Bsp. Nr. | $R^1$ | $R^2$ | $R^3$ | $R^4$ | $R^5$ | $R^6$ | $R^7$ | $R^8$ | $R^9$ | Schmp. [°C] |
|---|---|---|---|---|---|---|---|---|---|---|
| 17 | -Cl | $-SO_2CH_3$ | H | $CH_3$ | $CH_3$ | H | H | H | H | Öl |
| 18 | -Cl | $-SO_2CH_3$ | H | $CH_3$ | $CH_3$ | H | H | H | $CH_3$ | Öl |
| 19 | $-NO_2$ | -H | H | $CH_3$ | $CH_3$ | $CH_3$ | H | H | H | Öl |
| 20 | $-NO_2$ | -Cl | H | H | H | H | $CH_3$ | $CH_3$ | $CH_3$ | Öl |
| 21 | -Cl | $-NO_2$ | H | $CH_3$ | $CH_3$ | $CH_3$ | H | H | H | ÖL |
| 22 | -Cl | $-SO_2CH_3$ | H | $CH_3$ | $CH_3$ | $CH_3$ | H | H | H | Öl |
| 23 | $-NO_2$ | -H | H | H | H | H | H | H | H | 142 |
| 24 | -H | -H | $3-NO_2$ | H | H | H | H | H | H | 87 |
| 25 | -H | -H | $3-NO_2$ | H | H | $CH_3$ | $CH_3$ | H | H | 82 |
| 26 | -F | -H | 6-F | H | H | H | H | H | H | 86 |
| 27 | -F | -H | 6-F | $CH_3$ | $CH_3$ | H | H | H | H | 95 |
| 28 | -F | -H | 6-F | H | H | $CH_3$ | $CH_3$ | H | H | Öl |
| 29 | $-OCH_2$ | -H | $6-OCH_3$ | H | H | $CH_3$ | $CH_3$ | H | H | 153 |
| 30 | $-NO_2$ | -H | 5-Cl | H | H | H | H | H | H | 165 |
| 31 | $-NO_2$ | -H | 5-Cl | H | H | H | H | $CH_3$ | $CH_3$ | 122 |
| 32 | $-NO_2$ | -H | 5-Cl | H | H | $CH_3$ | $CH_3$ | H | H | 132 |
| 33 | $-NO_2$ | -H | 5-Cl | H | $CH_3$ | H | H | $CH_3$ | $CH_3$ | 119 |
| 34 | -Cl | $-SO_2CH_3$ | H | H | H | $CH_3$ | $CH_3$ | H | H | 138-139 |
| 35 | $-NO_2$ | -H | H | H | H | $CH_3$ | $CH_3$ | H | H | 132-134 |
| 36 | -Cl | -Cl | H | H | H | H | H | H | H | 102-104 |
| 37 | -Cl | -F | H | H | H | H | H | H | $i-C_3H_7$ | Öl |
| 38 | $-NO_2$ | -Cl | H | H | H | H | H | $i-C_3H_7$ | H | 108 |

## C. Biologische Beispiele

### 1. Unkrautwirkung und Selektivität im Vorauflauf

Im Reisanbau vorkommende Unkräuter sowie Reispflanzen werden in mit Wasser gesättigtem Boden kultiviert, wobei so viel Wasser in die Töpfe gefüllt wird, daß es bis zur Bodenoberfläche oder einige Millimeter darüber steht.

Die in Form von benetzbaren Pulvern oder Emulsionskonzentraten formulierten Wirkstoffe der Formel (I) oder deren Salze werden dann als wäßrige Suspensionen bzw. Emulsionen mit einer Wasseraufwandmenge von umgerechnet 600 bis 800 l/ha in unterschiedlichen Dosierungen darüber appliziert.
Nach der Behandlung werden die Töpfe im Gewächshaus aufgestellt und unter guten Wachstumsbedingungen für die Pflanzen gehalten. Die optische Bonitur der Pflanzen- bzw. der Auflaufschäden erfolgte nach dem Auflaufen der Versuchspflanzen nach einer Versuchszeit von 3 bis 4 Wochen im Vergleich zu unbehandelten Kontrollen.

Die Schädigung der Unkrautpflanzen bzw. die Kulturpflanzenverträglichkeit wurde gemäß einem Schlüssel bonitiert, in dem die Wirksamkeit durch Wertzahlen von 0 bis 5 ausgedrückt ist. Dabei bedeutet:
0 = ohne Wirkung
1 = 0 bis 20 % Wirkung bzw. Schaden
2 = 20 bis 40 % Wirkung bzw. Schaden
3 = 40 bis 60 % Wirkung bzw. Schaden
4 = 60 bis 80 % Wirkung bzw. Schaden
5 = 80 bis 100 % Wirkung bzw. Schaden
In einigen Beispielen ist zusätzlich die Wirkung in Prozentwerten angegeben (siehe Werte in Klammern).

Die erfindungsgemäßen eingesetzten Wirkstoffe weisen eine gute herbizide Vorauflaufwirksamkeit gegen ein breites Spektrum von Ungräsern und Unkräutern auf, wobei die Reispflanzen wenig oder gar nicht geschädigt werden. Einige Ergebnisse sind in Tabelle 2 zusammengestellt.

Tabelle 2: Wirkung im Vorauflauf

| Wirkstoff Bsp. Nr. | Dosis kg/ha | Boniturwert (% Schädigung) OSV | OSS | SAPA | ELAC | CYMO | SCMA | SCJU |
|---|---|---|---|---|---|---|---|---|
| 1 | 0,06 | 0(0) | 2(25) | 5(93) | 5(95) | 5(98) | 5(99) | 5(95) |
| | 0,03 | 0(0) | 1(20) | 5(90) | 5(90) | 5(98) | 5(97) | 4(75) |
| | 0,015 | 0(0) | 0(0) | 4(75) | 5(85) | 5(98) | 5(88) | 4(70) |
| | 0,008 | 0(0) | 0(0) | 3(60) | 4(80) | 5(98) | 4(75) | 3(50) |
| 34 | 0,06 | 1 | 2 | 5 | 5 | 5 | 5 | 3 |
| | 0,03 | 0 | 1 | 5 | 5 | 5 | 5 | 2 |
| | 0,015 | 0 | 0 | 4 | 4 | 4 | 5 | 2 |
| | 0,008 | 0 | 0 | 3 | 4 | 3 | 2 | 2 |
| 36 | 0,12 | 0 | 0 | 4 | 4 | 5 | 1 | 0 |
| | 0,06 | 0 | 0 | 2 | 2 | 5 | 1 | 0 |
| | 0,03 | 0 | 0 | 1 | 1 | 4 | 0 | 0 |
| | 0,015 | 0 | 0 | 1 | 0 | 4 | 0 | 0 |
| 38 | 0,12 | 0 | 2 | 5 | 5 | 5 | - | - |
| 39 | 0,12 | 2 | 3 | 5 | 4 | 4 | - | - |
| | 0,06 | 1 | 3 | 4 | 4 | 4 | - | - |
| | 0,03 | 0 | 2 | 4 | 3 | 2 | - | - |
| 16 | 0,5 | 2 | 2 | 5 | 5 | 5 | - | - |
| | 0,25 | 1 | 1 | 5 | 5 | 5 | - | - |
| | 0,12 | 0 | 0 | 5 | 4 | 4 | - | - |
| | 0,06 | 0 | 0 | 5 | 2 | 4 | - | - |
| 6 | 0,5 | 2 | 3 | 5 | 5 | 5 | - | - |
| | 0,25 | 1 | 2 | 5 | 4 | 5 | - | - |
| | 0,12 | 1 | 1 | 5 | 4 | 4 | - | - |
| | 0,06 | 0 | 1 | 4 | 2 | 2 | - | - |

Forsetzung Tabelle 2

| Wirkstoff Bsp. Nr. | Dosis kg/ha | Boniturwert (% Schädigung) OSV | OSS | SAPA | ELAC | CYMO | SCMA | SCJU |
|---|---|---|---|---|---|---|---|---|
| 7 | 0,06 | 2 | 3 | 5 | 5 | 5 | - | - |
| | 0,03 | 1 | 1 | 5 | 5 | 5 | - | - |
| 18 | 0,06 | 1 | 3 | 5 | 5 | 5 | - | - |
| | 0,03 | 0 | 1 | 5 | 5 | 5 | - | - |
| 5 | 0,12 | 1 | 3 | 5 | 5 | 5 | - | - |
| | 0,06 | 0 | 3 | 5 | 5 | 5 | - | - |
| 11 | 0,12 | 1 | 5 | 5 | 5 | 5 | - | - |
| | 0,06 | 0 | 3 | 5 | 4 | 4 | - | - |
| 12 | 0,06 | 1 | 3 | 5 | 5 | 3 | - | - |
| | 0,03 | 0 | 1 | 4 | 4 | 3 | - | - |
| 13 | 0,25 | 1 | 3 | 5 | 5 | 5 | - | - |
| | 0,12 | 1 | 1 | 5 | 5 | 5 | - | - |
| | 0,06 | 0 | 1 | 5 | 4 | 5 | - | - |
| | 0,03 | 0 | 0 | 3 | 3 | 3 | - | - |
| 15 | 0,5 | 2 | 3 | 5 | 5 | 5 | - | - |
| | 0,25 | 0 | 1 | 5 | 5 | 5 | - | - |
| | 0,12 | 0 | 0 | 5 | 5 | 5 | - | - |
| | 0,06 | 0 | 0 | 4 | 5 | 4 | - | - |
| 4 | 0,25 | 1 | 3 | 5 | 5 | 5 | - | - |
| | 0,12 | 0 | 2 | 5 | 5 | 5 | - | - |
| | 0,06 | 0 | 1 | 5 | 4 | 5 | - | - |
| | 0,03 | 0 | 1 | 4 | 3 | 5 | - | - |
| 19 | 0,12 | 2 | 3 | 5 | 5 | 5 | - | - |
| | 0,06 | 0 | 2 | 5 | 5 | 5 | - | - |
| | 0,03 | 0 | 1 | 4 | 4 | 4 | - | - |
| 20 | 0,06 | 2 | 4 | 5 | 5 | 5 | - | - |
| | 0,03 | 1 | 2 | 5 | 5 | 5 | - | - |

Forsetzung Tabelle 2

| Wirkstoff Bsp. Nr. | Dosis kg/ha | Boniturwert (% Schädigung) OSV | OSS | SAPA | ELAC | CYMO | SCMA | SCJU |
|---|---|---|---|---|---|---|---|---|
| 21 | 0,25 | 1 | 1 | 5 | 5 | 5 | - | - |
| | 0,12 | 0 | 1 | 5 | 5 | 5 | - | - |
| | 0,06 | 0 | 0 | 3 | 4 | 5 | - | - |
| | 0,03 | 0 | 0 | 2 | 3 | 3 | - | - |
| 2 | 0,25 | 0 | 3 | 5 | 5 | 5 | - | - |
| | 0,12 | 0 | 2 | 5 | 5 | 5 | - | - |
| | 0,06 | 0 | 2 | 5 | 5 | 5 | - | - |
| | 0,03 | 0 | 1 | 5 | 5 | 5 | - | - |
| 23 | 0,5 | 1 | 2 | 5 | 5 | 5 | - | - |
| | 0,25 | 0 | 1 | 5 | 5 | 5 | - | - |
| | 0,12 | 0 | 0 | 5 | 5 | 5 | - | - |
| | 0,06 | 0 | 0 | 3 | 4 | 5 | - | - |
| 33 | 0,5 | 1 | 0 | 5 | 5 | 5 | - | - |
| | 0,25 | 0 | 0 | 5 | 5 | 5 | - | - |
| | 0,12 | 0 | 0 | 4 | 4 | 2 | - | - |
| | 0,06 | 0 | 0 | 2 | 4 | 1 | - | - |
| 31 | 0,5 | 1 | 1 | 4 | 5 | 4 | - | - |
| | 0,25 | 0 | 0 | 4 | 4 | 3 | - | - |
| | 0,12 | 0 | 0 | 3 | 3 | 1 | - | - |
| | 0,06 | 0 | 0 | 3 | 2 | 1 | - | - |
| 30 | 0,5 | 0 | 1 | 5 | 5 | 4 | - | - |
| | 0,25 | 0 | 0 | 5 | 4 | 4 | - | - |
| | 0,12 | 0 | 0 | 5 | 2 | 4 | - | - |
| | 0,06 | 0 | 0 | 3 | 1 | - | - | - |

Abkürzungen:

OSV Oryza sativa, verpflanzt - Reis

OSS Oryza sativa, gesät - Reis

SAPY Sagittaria pygmea

ELAC Eleocharis acicularis
CYMO Cyperus montis
SCMA Scirpus maritimus - Gemeine Strandbinse
SCJU Scirpus juncoides - Binse
Dosis = Dosis bezogen auf reinen Wirkstoff
[= kg a.i./ha mit a.i. = active ingredient]

**2. Unkrautwirkung im Nachauflauf**

Im Reisanbau vorkommende Unkräuter sowie Reispflanzen werden in Töpfen angezogen, in denen Wasser bis zu 2 cm über der Bodenoberfläche steht, und während der Versuchsphase kultiviert. Drei Wochen nach der Aussaat werden die Versuchspflanzen im Dreiblattstadium behandelt.

Die als Spritzpulver bzw. als Emulsionskonzentrate formulierten Wirkstoffe der Formel (I) oder deren Salze werden in verschiedenen Dosierungen mit einer Wasseraufwandmenge von umgerechnet 300 bis 600 l/ha auf die grünen Pflanzenteile gesprüht und nach ca. 3 bis 4 Wochen Standzeit der Versuchspflanzen im Gewächshaus unter optimalen Wachstumsbedingungen die Wirkung der Präparate optisch im Vergleich zu unbehandelten Kontrollen bonitiert. Alternativ werden die Wirkstoffe auch direkt ins Bewässerungswasser gegeben (Applikation in Analogie zur sogenannten Granulatanwendung) oder auf Pflanzen und ins Bewässerungswasser gesprüht. Die erfindungsgemäßen Mittel weisen auch im Nachauflauf eine gute herbizide Wirksamkeit gegen ein breites Spektrum wirtschaftlich wichtiger Ungräser und Unkräuter auf, wobei die Reispflanzen wenig oder gar nicht geschädigt werden (vgl. Tabelle 3).

Tabelle 3

| Wirkung im Nachauflauf: | | | | | | | | |
|---|---|---|---|---|---|---|---|---|
| Wirkstoff Bsp. Nr. | Dosis kg/ha | OSV | OSS | SAPA | ELAC | CYMO | SCMA | SCJU |
| 1 | 0,12<br>0,06<br>0,03<br>0,015 | 2(25)<br>1(15)<br>0(0)<br>0(0) | 1(8)<br>0(0)<br>0(0)<br>0(0) | 5(85)<br>4(75)<br>4(75)<br>4(75) | 3(60)<br>3(60)<br>3(60)<br>4(60) | 5(85)<br>5(85)<br>4(80)<br>4(80) | 5(95)<br>5(90)<br>5(83)<br>4(75) | 5(95)<br>5(93)<br>5(90)<br>4(80) |
| 34 | 0,12<br>0,06<br>0,03<br>0,15 | 4<br>2<br>1<br>0 | 1<br>0<br>0<br>0 | 3<br>2<br>2<br>1 | 5<br>5<br>4<br>4 | 5<br>5<br>5<br>5 | 5<br>4<br>4<br>4 | 4<br>3<br>2<br>2 |
| 36 | 0,5<br>0,25<br>0,12 | 1<br>1<br>0 | 1<br>0<br>0 | 5<br>5<br>4 | 4<br>4<br>3 | 5<br>4<br>3 | 2<br>1<br>0 | 1<br>0<br>0 |
| 38 | 0,5<br>0,25 | 3<br>2 | 0<br>0 | 3<br>2 | 4<br>4 | 5<br>4 | -<br>- | -<br>- |
| 39 | 0,25<br>0,12 | 2<br>2 | 4<br>3 | 5<br>5 | 4<br>4 | 5<br>4 | -<br>- | -<br>- |
| 16 | 0,5<br>0,25 | 1<br>0 | 0<br>0 | 2<br>2 | 4<br>4 | 5<br>4 | -<br>- | -<br>- |
| 6 | 0,5 | 0 | 0 | 3 | 3 | 5 | - | - |
| 15 | 0,5<br>0,25<br>0,12 | 1<br>0<br>0 | 0<br>0<br>0 | 4<br>3<br>2 | 5<br>5<br>4 | 5<br>5<br>4 | -<br>-<br>- | -<br>-<br>- |
| 4 | 0,25<br>0,12 | 1<br>0 | 0<br>0 | 4<br>3 | 4<br>3 | 5<br>5 | -<br>- | -<br>- |
| 19 | 0,25 | 0 | 0 | 2 | 4 | 5 | - | - |
| 2 | 0,25<br>0,12<br>0,06<br>0,03 | 0<br>0<br>0<br>0 | 0<br>0<br>0<br>0 | 3<br>2<br>2<br>2 | 5<br>4<br>4<br>4 | 5<br>5<br>5<br>5 | -<br>-<br>-<br>- | -<br>-<br>-<br>- |
| 23 | 0,5<br>0,25<br>0,12 | 0<br>0<br>0 | 0<br>0<br>0 | 3<br>2<br>2 | 4<br>3<br>3 | 4<br>4<br>3 | -<br>-<br>- | -<br>-<br>- |
| Abkürzungen: Siehe Tabelle 1 | | | | | | | | |

**Patentansprüche**

**1.** Verfahren zur Bekämpfung von Schadpflanzen in Reiskulturen, dadurch gekennzeichnet, daß man ein oder mehrere Verbindungen der allgemeinen Formel (I) oder deren Salze

(I)

worin

$R^1$ Halogen, $(C_1\text{-}C_4)$-Alkoxy, $(C_1\text{-}C_4)$-Alkyl, $(C_1\text{-}C_4)$-Haloalkyl, $-NO_2$, -CN oder $S(O)_nR^{10}$;

$R^2$ und $R^3$ unabhängig voneinander Wasserstoff, Halogen, $(C_1\text{-}C_4)$-Alkyl, $(C_1\text{-}C_4)$-Alkoxy, $OCF_3$, $(C_1\text{-}C_4)$-Haloalkyl, -CN, $-NO_2$, $-S(O)_m\text{-}R^{11}$, $-NR^{12}R^{13}$, $-NR^{14}\text{-CO-}R^{15}$, $\text{-CO-}R^{16}$;

$R^4$, $R^6$, $R^7$, $R^8$, $R^9$ unabhängig voneinander Wasserstoff oder $(C_1\text{-}C_4)$-Alkyl;

$R^5$ Wasserstoff, $(C_1\text{-}C_4)$-Alkyl oder $\text{-CO-O-}(C_1\text{-}C_4)$-Alkyl;

$R^{10}$ $(C_1\text{-}C_4)$-Alkyl, $(C_1\text{-}C_4)$-Haloalkyl oder $(C_1\text{-}C_4)$-Alkoxy;

$R^{11}$ $(C_1\text{-}C_4)$-Alkyl, $(C_1\text{-}C_4)$-Haloalkyl, Phenyl, Benzyl, oder $-NR^{17}R^{18}$;

$R^{12}$ und $R^{13}$ unabhängig voneinander Wasserstoff oder $(C_1\text{-}C_4)$-Alkyl;

$R^{14}$ Wasserstoff oder $(C_1\text{-}C_4)$-Alkyl;

$R^{15}$ $(C_1\text{-}C_4)$-Alkyl;

$R^{16}$ Wasserstoff, $(C_1\text{-}C_4)$-Alkyl, $(C_1\text{-}C_4)$-Haloalkyl oder $(C_1\text{-}C_4)$-Alkoxy;

$R^{17}$ und $R^{18}$ unabhängig voneinander Wasserstoff oder $(C_1\text{-}C_4)$-Alkyl und

n und m unabhängig voneinander 0, 1 oder 2 bedeuten,

auf die Anbaufläche, welche Schad- und Reispflanzen oder deren Samen enthält, in einer wirksamen Menge von 0,001 bis 0,5 kg a.i./ha appliziert.

**2.** Verfahren nach Anspruch 1, dadurch gekennzeichnet, daß

$R^1$ Fluor, Chlor, Brom, Jod, Methoxy, Nitro, Cyano oder $-S(O)_nR^{10}$,

$R^2$ und $R^3$ unabhängig voneinander Wasserstoff, Fluor, Chlor, Brom, Jod, Methyl, Methoxy, Trifluormethoxy, Cyano, Nitro, Trifluormethyl, $-SO_2R^{11}$, $-NR^{12}R^{13}$, $-N(CH_3)\text{-CO-}R^{15}$ oder $\text{-CO-O-}(C_1\text{-}C_4)$-Alkyl und

$R^4$, $R^5$, $R^6$, $R^7$, $R^8$ und $R^9$ unabhängig voneinander Wasserstoff oder Methyl bedeuten sowie

$R^{10}$, $R^{11}$, $R^{12}$, $R^{13}$, $R^{14}$ und n wie in Anspruch 1 definiert sind.

**3.** Verfahren nach Anspruch 1 oder 2, dadurch gekennzeichnet, daß

$R^2$ und $R^3$ unabhängig voneinander Wasserstoff, Fluor, Chlor, Brom, $-N(CH_3)_2$, Methoxy, Nitro, $-SO_2CH_3$, $-SO_2CH_2Cl$, $-SO_2\text{-}C_2H_5$-, $-SO_2N(CH_3)_2$ oder Trifluormethyl und

n 2 bedeuten sowie

$R^1$, $R^4$, $R^5$, $R^6$, $R^7$, $R^8$ und $R^9$ wie in Anspruch 1 definiert sind.

**4.** Verfahren nach einem oder mehreren der Ansprüche 1 bis 3, dadurch gekennzeichnet, daß man 0,01 bis 0,2 kg a.i./ha Wirkstoffe der Formel (I) im Vor- oder Nachauflaufverfahren appliziert.

**5.** Verfahren nach Anspruch 3, dadurch gekennzeichnet, daß 0,02 bis 0,12 kg a.i./ha Wirkstoffe appliziert werden.

**6.** Verfahren nach einem oder mehreren der Ansprüche 1 bis 5, dadurch gekennzeichnet, daß die Applikation im Vor- oder im frühen Nachauflaufverfahren erfolgt.

**7.** Verfahren nach einem oder mehreren der Ansprüche 1 bis 6, dadurch gekennzeichnet, daß als Verbindung der Formel (I) 2-[2-Chlor-4-(methylsulfonyl)-benzoyl]-1,3-cyclohexandion oder dessen Salz eingesetzt wird.

**8.** Verfahren nach einem oder mehreren der Ansprüche 1 bis 6, dadurch gekennzeichnet, daß als Wirkstoff der Formel (I) 2-(2-Nitro-4-chlorbenzoyl)-1,3-cyclohexandion oder dessen Salz eingesetzt wird.

**9.** Verfahren nach einem oder mehreren der Ansprüche 1 bis 6, dadurch gekennzeichnet daß als Wirkstoff der Formel (I) 2-(2-Chlor-4-nitrobenzoyl)-4,4-dimethyl-6-methyl-1,3-cyclohexandion oder dessen Salz eingesetzt wird.

**10.** Verfahren nach einem oder mehreren der Ansprüche 1 bis 6, dadurch gekennzeichnet, daß als Wirkstoff der Formel (I) 2-(2-Chlor-4-methylsulfonyl-benzoyl)-5,5-dimethyl-1,3-cyclohexandion oder dessen Salz eingesetzt wird.

## Claims

**1.** A method for controlling harmful plants in rice growing, which comprises applying, to the area under cultivation which contains harmful plants and rice plants or their seeds, one or more compounds of the formula (I) or salts thereof

(I)

where

| | |
|---|---|
| $R^1$ | is halogen, $(C_1\text{-}C_4)$alkoxy, $(C_1\text{-}C_4)$alkyl, $(C_1\text{-}C_4)$-haloalkyl, $-NO_2$, -CN or $S(O)_nR^{10}$; |
| $R^2$ and $R^3$ | independently of one another are hydrogen, halogen, $(C_1\text{-}C_4)$alkyl, $(C_1\text{-}C_4)$alkoxy, $OCF_3$, $(C_1\text{-}C_4)$haloalkyl, -CN, $-NO_2$, $-S(O)_m\text{-}R^{11}$, $-NR^{12}R^{13}$, $-NR^{14}\text{-CO-}R^{15}$, $\text{-CO-}R^{16}$; |
| $R^4$, $R^6$, $R^7$, $R^8$ and $R^9$ | independently of one another are hydrogen or $(C_1\text{-}C_4)$alkyl; |
| $R^5$ | is hydrogen, $(C_1\text{-}C_4)$alkyl or $\text{-CO-O-}(C_1\text{-}C_4)$alkyl; |
| $R^{10}$ | is $(C_1\text{-}C_4)$alkyl, $(C_1\text{-}C_4)$haloalkyl or $(C_1\text{-}C_4)$-alkoxy; |
| $R^{11}$ | is $(C_1\text{-}C_4)$alkyl, $(C_1\text{-}C_4)$haloalkyl, phenyl, benzyl or $-NR^{17}R^{18}$; |
| $R^{12}$ and $R^{13}$ | independently of one another are hydrogen or $(C_1\text{-}C_4)$alkyl; |
| $R^{14}$ | is hydrogen or $(C_1\text{-}C_4)$alkyl; |
| $R^{15}$ | is $(C_1\text{-}C_4)$alkyl; |
| $R^{16}$ | is hydrogen, $(C_1\text{-}C_4)$alkyl, $(C_1\text{-}C_4)$haloalkyl or $(C_1\text{-}C_4)$alkoxy; |
| $R^{17}$ and $R^{18}$ | independently of one another are hydrogen or $(C_1\text{-}C_4)$alkyl and |
| n and m | independently of one another are 0, 1 or 2, |

in an effective amount of from 0.001 to 0.5 kg of a.i./ha.

**2.** The method as claimed in claim 1, wherein

| | |
|---|---|
| $R^1$ | is fluorine, chlorine, bromine, iodine, methoxy, nitro, cyano or $-S(O)_nR^{10}$; |
| $R^2$ and $R^3$ | independently of one another are hydrogen, fluorine, chlorine, bromine, iodine, methyl, methoxy, trifluoromethoxy, cyano, nitro, trifluoromethyl, $-SO_2R^{11}$, $-NR^{12}R^{13}$, $-N(CH_3)\text{-CO-}R^{15}$ or $\text{-CO-O-}(C_1\text{-}C_4)$alkyl and |
| $R^4$, $R^5$, $R^6$, $R^7$, $R^8$ and $R^9$ | independently of one another are hydrogen or methyl, and |
| $R^{10}$, $R^{11}$, $R^{12}$, $R^{13}$, $R^{14}$ and n | are as defined in claim 1. |

**3.** The method as claimed in claim 1 or 2, wherein

| | |
|---|---|
| $R^2$ and $R^3$ | independently of one another are hydrogen, fluorine, chlorine, bromine, $-N(CH_3)_2$, methoxy, nitro, $-SO_2CH_3$, $-SO_2CH_2Cl$, $-SO_2\text{-}C_2H_5$-, $-SO_2N(CH_3)_2$ or trifluoromethyl and |
| n | is 2, and |
| $R^1$, $R^4$, $R^5$, $R^6$, $R^7$, $R^8$ and $R^9$ | are as defined in claim 1. |

4. The method as claimed in one or more of claims 1 to 3, wherein 0.01 to 0.2 kg of a.i./ha of active substances of the formula (I) are applied pre-emergence or post-emergence.

5. The method as claimed in claim 3, wherein active substances are applied at a rate of 0.02 to 0.12 kg of a.i./ha.

6. The method as claimed in one or more of claims 1 to 5, wherein the active substances are applied pre-emergence or early post-emergence.

7. The method as claimed in one or more of claims 1 to 6, wherein 2-[2-chloro-4-(methylsulfonyl)benzoyl]-1,3-cyclohexanedione or a salt thereof is employed as the compound of the formula (I).

8. The method as claimed in one or more of claims 1 to 6, wherein 2-(2-nitro-4-chlorobenzoyl)-1,3-cyclohexanedione or a salt thereof is employed as the active compound of the formula (I).

9. The method as claimed in one or more of claims 1 to 6,wherein 2-(2-chloro-4-nitrobenzoyl)-4,4-dimethyl-6-methyl-1,3-cyclohexanedione or a salt thereof is employed as the active compound of the formula (I).

10. The method as claimed in one or more of claims 1 to 6,wherein 2-(2-chloro-4-methylsulfonylbenzoyl)-5,5-dimethyl-1,3-cyclohexanedione or a salt thereof is employed as the active compound of the formula (I).

**Revendications**

1. Procédé de lutte contre les plantes nuisibles dans les cultures de riz, caractérisé en ce qu'on applique un ou plusieurs composés de formule générale (I) ou leurs sels

(I)

dans laquelle

$R^1$ signifie un halogène, un alcoxy en $C_1$-$C_4$, un alkyle en $C_1$-$C_4$, un haloalkyle en $C_1$-$C_4$, un -$NO_2$, un -CN ou un $S(O)_nR^{10}$;

$R^2$ et $R^3$, indépendamment l'un de l'autre, signifient un hydrogène, un halogène, un alkyle en $C_1$-$C_4$, un alcoxy en $C_1$-$C_4$, un $OCF_3$, un haloalkyle en $C_1$-$C_4$, un -CN, un -$NO_2$, un -$S(O)_m$-$R^{11}$, un -$NR^{12}R^{13}$, un -$NR^{14}$-CO-$R^{15}$, un -CO-$R^{16}$;

$R^4$, $R^6$, $R^7$, $R^8$, $R^9$, indépendamment l'un de l'autre, signifient un hydrogène ou un alkyle en $C_1$-$C_4$;

$R^5$ signifie un hydrogène, un alkyle en $C_1$-$C_4$ ou un -CO-O-(alkyle en $C_1$-$C_4$);

$R^{10}$ signifie un alkyle en $C_1$-$C_4$, un haloalkyle en $C_1$-$C_4$ ou un alcoxy en $C_1$-$C_4$;

$R^{11}$ signifie un alkyle en $C_1$-$C_4$, un haloalkyle en $C_1$-$C_4$, un phényle, un benzyle ou un -$NR^{17}R^{18}$;

$R^{12}$ et $R^{13}$, indépendamment l'un de l'autre, signifient un hydrogène ou un alkyle en $C_1$-$C_4$;

$R^{14}$ signifie un hydrogène ou un alkyle en $C_1$-$C_4$;

$R^{15}$ signifie un alkyle en $C_1$-$C_4$;

$R^{16}$ signifie un hydrogène, un alkyle en $C_1$-$C_4$, un haloalkyle en $C_1$-$C_4$ ou un alcoxy en $C_1$-$C_4$;

$R^{17}$ et $R^{18}$, indépendamment l'un de l'autre, signifient un hydrogène ou un alkyle en $C_1$-$C_4$ et

n et m, indépendamment l'un de l'autre, valent 0, 1 ou 2,

sur la terre cultivable, laquelle contient les plantes nuisibles et les plants de riz ou leurs semences, en une quantité active allant de 0,001 à 0,5 kg d'ingrédient actif/ha.

2. Procédé selon la revendication 1, caractérisé en ce que

$R^1$ signifie un fluor, un chlore, un brome, un iode, un méthoxy, un nitro, un cyano ou un -$S(O)_nR^{10}$,

$R^2$ et $R^3$, indépendamment l'un de l'autre, signifient un hydrogène, un fluor, un chlore, un brome, un iode, un méthyle, un méthoxy, un trifluorométhoxy, un cyano, un nitro, un trifluorométhyle, un $-SO_2R^{11}$, un $-NR^{12}R^{13}$, un $-N(CH3)-COR^{15}$ ou un -CO-O-(alkyle en $C_1$-$C_4$) et

$R^4$, $R^5$, $R^6$, $R^7$, $R^8$ et $R^9$, indépendamment l'un de l'autre, signifient un hydrogène ou un méthyle et

$R^{10}$, $R^{11}$, $R^{12}$, $R^{13}$, $R^{14}$ et n sont définis comme dans la revendication 1.

**3.** Procédé selon la revendication 1 ou 2, caractérisé en ce que

$R^2$ et $R^3$, indépendamment l'un de l'autre, signifient un hydrogène, un fluor, un chlore, un brome, un $-N(CH_3)_2$, un méthoxy, un nitro, un $-SO_2CH_3$, $-SO_2CH_2Cl$, un $-SO_2-C_2H_5$, un $-SO_2N(CH_3)_2$ ou un trifluorométhyle et

n vaut 2 et

$R^1$, $R^4$, $R^5$, $R^6$, $R^7$, $R^8$ et $R^9$ sont définis comme dans la revendication 1.

**4.** Procédé selon l'une ou plusieurs des revendications 1 à 3, caractérisé en ce qu'on applique entre 0,01 et 0,2 kg d'ingrédient actif/ha de substance active de formule (I) en traitement de prélevée ou en traitement de post-levée.

**5.** Procédé selon la revendication 3, caractérisé en ce qu'on applique de 0,02 à 0,12 kg d'ingrédient actif/ha.

**6.** Procédé selon l'une ou plusieurs des revendications 1 à 5, caractérisé en ce que l'application a lieu en traitement de prélevée ou en traitement précoce de post-levée.

**7.** Procédé selon l'une ou plusieurs des revendications 1 à 6, caractérisé en ce que en tant que composé de formule (I), on utilise la 2-[2-chloro-4-(méthylsulfonyl)benzoyl]-1,3-cyclohexandione ou son sel.

**8.** Procédé selon l'une ou plusieurs des revendications 1 à 6, caractérisé en ce que en tant que substance active de formule (I), on utilise la 2-(2-nitro-4-chlorobenzoyl)-1,3-cyclohexandione ou son sel.

**9.** Procédé selon l'une ou plusieurs des revendications 1 à 6, caractérisé en ce que en tant que substance active de formule (I), on utilise la 2-(2-chloro-4-nitrobenzoyl)-4,4-diméthyl-6-méthyl-1,3-cyclohexandione ou son sel.

**10.** Procédé selon l'une ou plusieurs des revendications 1 à 6, caractérisé en ce que en tant que substance active de formule (I), on utilise la 2-(2-chloro-4-méthylsulfonyl-benzoyl)-5,5-diméthyl-1,3-cyclohexandione ou son sel.